# EUROPÄISCHE PATENTSCHRIFT

(11) **EP 1 145 486 B1**
(45) Veröffentlichungstag und Bekanntmachung des Hinweises auf die Patenterteilung: **29.12.2004**
(21) Anmeldenummer: 00903513.0
(22) Anmeldetag: 12.01.2000
(51) Int. Cl.: H04L 12/40

(54) **STEUER- UND DATENÜBERTRAGUNGSANLAGE**
CONTROL AND DATA TRANSMISSION SYSTEM
SYSTEME DE COMMANDE ET DE TRANSMISSION DE DONNEES

(30) Priorität: 12.01.1999 DE 19900869
(43) Veröffentlichungstag der Anmeldung: 17.10.2001
(73) Patentinhaber: IC-HAUS GmbH, D-55294 Bodenheim (DE)
(72) Erfinder: HERZ, Manfred, D-55130 Mainz (DE); IRMER, Frank, D-55116 Mainz (DE); BURKARD, Ralf, D-65321 Heidenrod (DE)
(74) Vertreter: Kampfenkel, Klaus, Dipl.-Ing.
(86) Internationale Anmeldenummer: PCT/DE2000/000083
(87) Internationale Veröffentlichungsnummer: WO 2000/041460

(56) Entgegenhaltungen:
- WO-A-96/04735
- DE-A- 4 412 921
- US-A- 5 589 813

## Beschreibung

Die Erfindung betrifft eine Steuer- und Datenübertragungsanlage, insbesondere zum Einsatz in einem Kraftfahrzeug, gemäß dem Oberbegriff des Anspruchs 1.

Gegenwärtig sind zahlreiche Bussysteme bekannt, bei denen eine Vielzahl von Teilnehmern in einem seriellen Bus hintereinander angeordnet sind. Die Daten werden von einer Haupteinrichtung, dem sogenannten Busmaster, über den Bus zu allen angeschalteten Teilnehmer und dann wieder zurück zum Busmaster übertragen. Zu den Busteilnehmern gehören beispielsweise Sensoren und Aktoren, die über den Bus Daten und Steuersignale senden und empfangen können. Bei solchen Bussystemen erfolgt die Datenübertragung entweder durch eine Spannungsmodulation oder mittels einer induktiv gekoppelten Strommodulation des Trägersignals, wobei im letzteren Fall ein besseres EMV-Verhalten des Bussystems im Vergleich zu spannungsmodulierten Datenübertragung erreicht werden kann, wenn als Bus beispielsweise ein verdrilltes Leitungspaar verwendet wird. Ein solches Bussystem ist beispielsweise aus der DE-PS 44 12 921 bekannt.

Der Erfindung liegt nunmehr die Aufgabe zugrunde, eine Steuer- und Datenübertragungsanlage mit einem seriellen Bus zu schaffen, bei dem die zu übertragenden Daten und Steuersignale strommoduliert werden und dessen Komponenten eine einfache und flexible Installation ermöglichen.

Die Erfindung löst dieses technische Problem mit den Merkmalen des Anspruchs 1.

Dazu weist die Steuer- und Datenübertragungsanlage neben einem wenigstens eine Arbeitstromschleife umfassenden Bus, mehreren Teilnehmern und einer Gleichspannungsquelle eine regelbare Busabschlußeinrichtung auf, die einen vorbestimmten, im wesentlichen konstanten Arbeitsstrom in den schleifenförmigen, seriellen Bus einprägt. Die regelbare Busabschlußeinrichtung dient daher dazu, während des Betriebszustandes der Steuer- und Datenübertragungsanlage einen im wesentlichen konstanten Arbeitsstrom in dem Bus aufrecht zu erhalten, indem sie beispielsweise temperatur- und alterungsbedingte Stromschwankungen der in den Bus geschalteten Teilnehmer kompensieren kann. Die in den Bus einschaltbaren Teilnehmer weisen jeweils eine gleichstrommäßig gekoppelte Sendeeinrichtung zum Erzeugen und Aussenden von den Arbeitstrom modulierenden Steuer- und Datensignalen und eine gleichstrommäßig gekoppelte Empfangseinrichtung zum Erfassen und Auswerten des von den Steuer- und Datensignalen modulierten Arbeitsstroms auf. Zur Übertragung der Daten und Steuersignale können beliebige Übertragungsprotokolle und Datenformate verwendet werden. Beispielsweise kann ein bestimmter Teilnehmer eine Nachricht gezielt zu einem ausgewählten Teilnehmer senden, indem in dem zu übertragenden Datenblock sowohl die Ziel- als auch die Ursprungsadresse enthalten ist. Die Nachricht kann in diesem Fall nur von dem Zielteilnehmer, dessen Zieladresse im Datenblock enthalten ist, gelesen werden

Vorteilhafte Weiterbildungen sind in den Unteransprüchen angegeben.

Um die Flexibilität der Steuer- und Datenübertragungsanlage zu erhöhen und deren Installation zu erleichtern, weist jede Sendeeinrichtung wenigstens eine gesteuerte Stromquelle und die Empfangseinrichtung einen Strommesser auf. Ferner sorgt die Empfangseinrichtung dafür, falls zwischen Ein- und Ausgang des entsprechenden Teilnehmers eine Potentialdifferenz entsteht, diese im wesentlichen konstant gehalten wird. An dieser Stelle sei darauf hingewiesen, daß die Potentialdifferenz zweckmäßigerweise bei allen angeschalteten Teilnehmern gleich ist; dies ist aber nicht notwendig. Jeder Teilnehmer ist ferner derart ausgebildet, daß er zwischen Sendebetrieb und Empfangsbetrieb umschaltbar ist. Die Umschaltung zwischen Sende- und Empfangsbetrieb erfolgt beispielsweise dadurch, daß im Sendebetrieb die Sendeeinrichtung und im Empfangsbetrieb die Empfangseinrichtung in den Bus eingeschleift wird.

Da der zu modulierende Arbeitsstrom durch alle Teilnehmer fließt, kann bei entsprechender Dimensionierung der regelbaren Busabschlußeinrichtung eine Datenübertragung sowohl in Vorwärts- als auch in Rückwärtsrichtung über den Bus erfolgen.

Die Flexibilität der Steuer- und Datenübertragungsanlage kann weiterhin dadurch gesteigert werden, daß wenigstens ein Teilnehmer masterfähig ist, das heißt neben Nutzdaten auch Steuerdaten zu den übrigen Teilnehmern aussenden kann.

Die Installation der Steuer- und Datenübertragungsanlage läßt sich dadurch vereinfachen, daß jeder Teilnehmer eine Gleichspannungs-Versorgungsquelle und/oder eine regelbare Busabschlußeinrichtung aufweist. Auf diese Weise kann der Einsatz einer separaten Gleichspannungsquelle und/oder einer separaten regelbaren Busabschlußeinrichtung vermieden werden. Jeder Teilnehmer enthält vielmehr alle zum Aufbau einer funktionsfähigen Steuer- und Datenübertragungsanlage erforderlichen Komponenten selbst. Die Teilnehmer können zudem als kostengünstige, standardisierte Bauelemente hergestellt werden, indem sie jeweils aus wenigstens einem, vorzugsweise identischen integrierten Schaltkreis aufgebaut sind. Mit solch implementierten Teilnehmern kann die Arbeitstromschleife des Bus hinter jedem beliebigen Teilnehmer aufgetrennt werden, ohne daß der Bus seine Struktur und damit seine Funktionsfähigkeit bis zur Unterbrechungsstelle verliert. Diese Fähigkeit wird durch die in jedem Teilnehmer integrierte regelbare Busabschlußeinrichtung erzielt. Sofern es sich bei dem Bus um eine Zweidrahtleitung handelt, schließt die Busabschlußeinrichtung des Teilnehmers, der vor der Auftrennungsstelle liegt, die Arbeitsstromschleife im Bus.

Zeckmäßigerweise umfasst der Bus eine Zweidrahtleitung in Form einer Ring- oder Stichleitung.

Damit sichergestellt ist, daß die regelbare Busabschlußeinrichtung im Verhältnis zur Datenübertragungsrate nur relativ langsame Störschwankungen ausregelt, ist die Zeitkonstante ausreichend groß im Verhältnis zur Datenübertragungsrate bzw. Bitlänge zu wählen.

Um zusätzliche Leitungen zur Energieversorgung der einzelnen Teilnehmer zu vermeiden, erfolgt die Energieversorgung ebenfalls über den Bus.

Die Leistungsfähigkeit der Steuer- und Datenübertragungsanlage wird dadurch gesteigert, daß nach Inbetriebnahme oder nach einer Unterbrechung, insbesondere des Busses, die Anlage sich selbst konfigurieren kann.

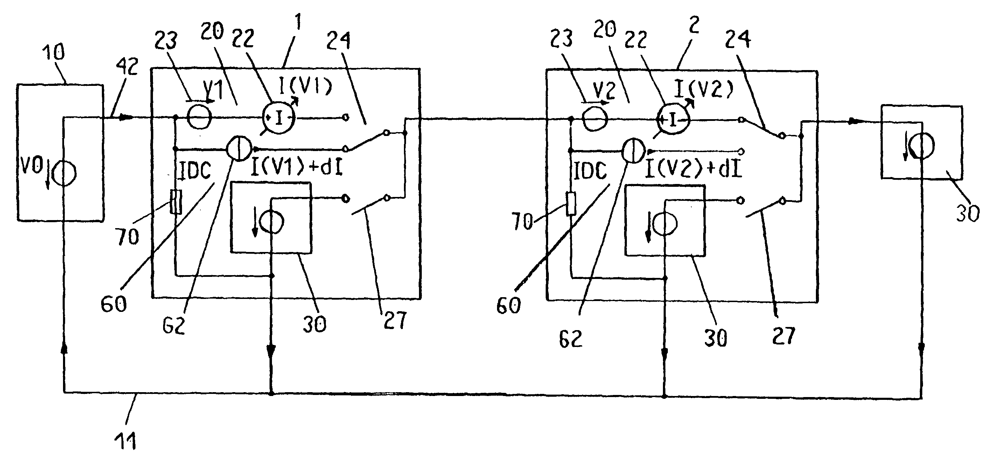

Die Erfindung wird nachfolgend anhand eines Ausführungsbeispiels in Verbindung mit der beiliegenden Figur näher erläutert.

In der Figur ist eine Steuer- und Datenübertragungsanlage 50 dargestellt, die beispielsweise in einem Kraftfahrzeug installiert sein kann. Selbstverständlich sind auch andere Einsatzgebiete, wie z. B. in Automatisierungsanlagen denkbar. Die Steuer- und Datenübertragungsanlage 50 umfaßt einen seriellen Bus mit einer Arbeitstromschleife 42, 44, die im vorliegenden Beispiel eine Zweidraht-Stichleitung 42,44 ist. Am linken Busende ist eine eine Gleichspannung V₀ (beispielsweise 20 V) liefernde Energieversorgungsquelle 10, nachfolgend kurz Gleichspannungsquelle bezeichnet, angeschaltet. Der Gleichspannungsquelle 10 folgt ein erster Teilnehmer 1, dem ein zweiter Teilnehmer 2 in Reihe nachgeschaltet ist. Lediglich der einfachen Darstellungsweise wegen umfaßt die Steuer- und Datenübertragungsanlage 50 nur zwei in Reihe geschaltete Teilnehmer 1 und 2. Am rechten Ende des Busses 40 ist eine regelbare Busabschlußeinrichtung 30 angeschlossen, deren wesentliche Aufgabe darin besteht, in den Bus einen vorbestimmten, im wesentlichen konstanten Arbeitsstrom einzuprägen. Wie in der Figur dargestellt, ist lediglich die Ader 42 des Busses durch die Teilnehmer 1 und 2 und die regelbare Busabschlußeinrichtung 30 durchgeschleift. Die Ader 44 dient als Masse- oder Rückleiter zur Gleichspannungsquelle 10.

Jeder Teilnehmer 1 und 2 weist eine gleichstrommäßig gekoppelte Empfangseinrichtung 20 auf, die wiederum einen Strommesser 22 enthält, der mit einer nicht dargestellten Auswertungs-Logikschaltung verbunden sein kann. Der oder die Schwellenwerte zum fehlerfreien Detektieren strommodulierter Daten können am Strommesser 22 präzise eingestellt werden, da die regelbare Busabschlußeinrichtung 30 für einen definierten Arbeitsgleichstrom im Bus 42, 44 sorgt. Die Empfangseinrichtung 20 ist zudem derart ausgebildet, daß zwischen Eingang und Ausgang jedes Teilnehmers 1 und 2 eine im wesentlichen konstante Potentialdifferenz anliegt. Diese Potentialdifferenz ist symbolisch durch die Spannungsquelle 23 in der Empfangseinrichtung 20 dargestellt. Es sei angemerkt, daß die zwischen Ein- und Ausgang jedes Teilnehmers eingestellte im wesentlichen konstante Potentialdifferenz gleich sein kann (z. B. 0.3 V), aber nicht gleich sein muß. Ferner weist jeder Teilnehmer 1 und 2 eine gleichstrommäßig gekoppelte Sendeeinrichtung 60 mit einer gesteuerten Stromquelle 62 auf. Je nach Ausführungsform kann die Sendeeinrichtung 60 auch mehrere gesteuerte Stromquellen enthalten, um einen digitalen oder analogen Datenstrom zu erzeugen. Die Stromquelle 62 ist derart ausgebildet, daß im Sendebetrieb die zu übertragenden Daten und/oder Steuersignale strommoduliert werden. Die Strommodulation kann dadurch erfolgen, daß der im Bus 42, 44 fließende Arbeitsstrom im Rhythmus der zu übertragenden Daten um einen vorbestimmten Gleichstrombetrag dI geändert wird. Jeder Teilnehmer 1 und 2 weist beispielsweise einen Schalter 24 auf, der je nach Betriebszustand der Teilnehmer entweder die Sendeeinrichtung 60 oder die Empfangseinrichtung 20 in die Ader 42 des Busses einschleift.

Da die Energieversorgung der Teilnehmer 1 und 2 im vorliegenden Beispiel ebenfalls über den Bus 42, 44 erfolgen soll, ist symbolisch ein Lastwiderstand 70 in jedem Teilnehmer 1 und 2 vorgesehen, der zwischen die beiden Adern 42 und 44 des Busses 40 geschaltet ist. Der über die Ader 42 durch die Teilnehmer 1 und 2 fließende Strom wird daher um den durch den Lastwiderstand 70 des Teilnehmers 1 und um den durch den Lastwiderstand 70 des Teilnehmers 2 fließenden Eigenstrom reduziert.

Jeder Teilnehmer 1 und 2 kann ferner eine eigene zuschaltbare regelbare Busabschlußeinrichtung 30 aufweisen. Auf diese Weise ist es möglich, daß der Bus 42, 44 zwischen jedem angeschalteten Teilnehmer aufgetrennt werden kann, ohne daß dadurch die Struktur und Funktionsfähigkeit des Busses 42, 44 bis zur Auftrennstelle beeinträchtigt wird. Ein weiterer Schalter 27 dient dazu, die Busabschlußeinrichtung 30 des jeweiligen Teilnehmers immer dann in den Bus 42, 44 einzuschleifen, wenn der Bus hinter dem entsprechenden Teilnehmer aufgetrennt ist. Auch die Teilnehmer hinter der Unterbrechungsstelle können wieder in einen funktionsfähigen Bus eingebunden werden, in dem eine neue Arbeitstromschleife gebildet wird. Hierzu muß lediglich die hinter der Unterbrechungsstelle angeordnete Gleichspannungsquelle, die in dem ersten Teilnehmer nach der Unterbrechungstelle implementiert sein kann, aktiviert werden. Sofern der Bus als Ringleiter aufgebaut ist, kann nach einer Unterbrechung des Busses nach wie vor jeder Teilnehmer mit allen anderen angeschalteten Teilnehmern Daten austauschen. Hierzu müssen der Teilnehmer vor und hinter der Unterbrechungsstelle den Bus mittels der integrierten Busabschlußeinrichtung schließen und es muß jeweils eine Gleichspannungsquelle am Busanfang aktiviert werden, wodurch zwei funktionsfähige Busse als Stichleitungen entstehen. Demzufolge wird die Datenübertragungsrichtung in einer der Stichleitungen umgekehrt. In diesem Fall ist es wichtig, daß die Teilnehmer bezüglich ihrer Arbeitsstrom führenden Anschlußklemmen symmetrisch aufgebaut sind.
Damit die regelbare Busabschlußeinrichtung 30 nicht die strommodulierten Daten- und Steuersignale sondern nur unerwünschte Stromschwankungen, die beispielsweise durch temperatur- und alterungsbedingte Einflüsse der Teilnehmer hervorgerufen werden, herausfiltern kann, ist sie derart zu dimensionieren, daß die schaltungsbedingte Zeitkonstante im Verhältnis zur Bitlänge der zu übertragenden Daten ausreichend groß ist. Die Zeitkonstante beträgt beispielsweise einige Millisekunden, während die Bitdauer einige Mikrosekunden betragen kann.
Obgleich in der Figur nicht dargestellt, kann jeder Teilnehmer 1 und 2 insbesondere einen Mikroprozessor zur Steuerung der Schalter 24 und 27 und der steuerbaren Stromquelle 62, Daten- und Steuersignalquellen, Daten- und Steuersignalspeicher und dergleichen enthalten.

Bei der in der Figur dargestellten Steuer- und Datenübertragungsanlage 50 arbeitet der Teilnehmer 1 im Sendebetrieb; denn die Sendeeinrichtung 60 ist über den Schalter 24 in die Ader 42 des Busses eingeschleift. Der Teilnehmer 2 hingegen arbeitet im Empfangsbetrieb. In diesem Fall ist die Empfangseinrichtung 20 über den Schalter 24 in die Ader 42 des Busses eingeschleift. Der Strommesser 22 der Empfangseinrichtung 20 ist derart ausgebildet, daß er die vom Teilnehmer 1 kommenden strommodulierten Daten erfassen und einer nicht dargestellten Auswerteeinrichtung zur weiteren Verarbeitung zuführen kann.

Gemäß einer weiteren Ausführungsform kann jeder Teilnehmer 1 und 2 eine eigene Gleichspannungsquelle 10 aufweisen, so daß zum vollständigen Aufbau der Steuer- und Datenübertragungsanlage 50 neben dem Bus 42, 44 lediglich die erforderliche Anzahl von Teilnehmern an den Bus 42, 44 angeschaltet werden muß. Eine separate Gleichspannungsquelle 10 und eine regelbare Busabschlußeinrichtung 30 sind danach nicht mehr erforderlich. Zudem kann jeder Teilnehmer als Busmaster fungieren. Ist erst einmal ein Teilnehmer als Busmaster ausgewählt worden, arbeiten alle übrigen Teilnehmer als sogenannte Slave-Teilnehmer.

## Patentansprüche

1. Steuer- und Datenübertragungsanlage, insbesondere für Kraftfahrzeuge, mit folgenden Merkmalen:
- ein serieller Bus (42, 44) zur Übertragung von Steuer- und Datensignalen,
- mehrere in den Bus (42, 44) einschleifbare Teilnehmer (1, 2), und
- eine Gleichspannungs-Versorgungsquelle (10) ,
**gekennzeichnet durch**
eine regelbare Busabschlußeinrichtung (30) zum Einprägen eines vorbestimmten Arbeitstroms in den Bus (42, 44) , wobei jeder Teilnehmer (1, 2) folgende Merkmale aufweist: eine gleichstrommäßig gekoppelte Sendeeinrichtung (60, 62) zum Erzeugen und Aussenden von den Arbeitsstrom modulierenden Steuer- und Datensignalen und
eine gleichstrommäßig gekoppelte Empfangseinrichtung (20, 22, 23) zum Erfassen und Auswerten des von den Steuer- und Datensignalen modulierten Arbeitsstroms.

2. Steuer- und Datenübertragungsanlage nach Anspruch 1, **dadurch gekennzeichnet, daß** die Sendeeinrichtung (60) wenigstens eine gesteuerte Stromquelle (62) enthält, daß die Empfangseinrichtung (20) einen Strommesser (22) enthält und zwischen Ein- und Ausgang des Teilnehmers eine im wesentlichen konstante Potentialdifferenz (23) liefert, und daß jeder Teilnehmer (1, 2) zwischen Sendebetrieb und Empfangsbetrieb umschaltbar ist.

3. Steuer- und Datenübertragungseinrichtung nach Anspruch 1 oder 2, **dadurch gekennzeichnet, daß** wenigstens ein Teilnehmer masterfähig ist.

4. Steuer- und Datenübertragungsanlage nach einem der Ansprüche 1 bis 3, **dadurch gekennzeichnet, daß** die Teilnehmer Daten- und/oder Steuersignale in beide Richtungen über den Bus (42, 44) übertragen können.

5. Steuer- und Datenübertragungsanlage nach einem der Ansprüche 1 bis 4, **dadurch gekennzeichnet, daß** jeder Teilnehmer (1, 2) eine Gleichspannungs-Versorgungsquelle (10) und/oder eine regelbare Busabschlußeinrichtung (30) aufweist.

6. Steuer- und Datenübertragungsanlage nach Anspruch 5, **dadurch gekennzeichnet, daß** die Teilnehmer aus wenigstens einem integrierten Schaltkreis aufgebaut sind.

7. Steuer- und Datenübertragungsanlage nach einem der Ansprüche 1 bis 6, **dadurch gekennzeichnet, daß** die Zeitkonstante der Busabschlußeinrichtung (30) größer ist als die Bitlänge der zu übertragenden Steuer- und Datensignale.

8. Steuer- und Datenübertragungsanlage nach einem der Ansprüche 1 bis 7, **dadurch gekennzeichnet,daß** die Energieversorgung der Teilnehmer (1, 2) über den Bus (42, 44) erfolgt.

9. Steuer- und Datenübertragungsanlage nach einem der Ansprüche 1 bis 8, **dadurch gekennzeichnet, daß** jeder Teilnehmer bezüglich seiner den Arbeitsstrom führenden Anschlußeinrichtungen symmetrisch ausgebildet ist.

10. Steuer- und Datenübertragungseinrichtung nach einem der Ansprüche 1 bis 9, **dadurch gekennzeichnet, daß** der Bus eine Zweidrahtleitung (42, 44) in Form einer Ring- oder Stichleitung umfasst.

11. Steuer- und Datenübertragungsanlage nach einem der Ansprüche 1 bis 10, **dadurch gekennzeichnet, daß** diese sich nach Inbetriebnahme oder nach einer Unterbrechung, insbesondere des Busses, selbst konfigurieren kann.

## Claims

1. A control and data transmission installation, particularly for motor vehicles, having the following features:
- a serial bus (42, 44) for transmitting control and data signals,
- a plurality of subscribers (1, 2) loopable into the bus (42, 44) and
- a DC supply source (10),
**characterised by**
a controllable bus terminating device (30) for impressing a predetermined working current into the bus (42, 44), each subscriber (1, 2) having the following features:
a DC-coupled transmission device (60, 62) for producing and emitting control and data signals modulating the working current and
a DC-coupled receiver device (20, 22, 23) for detecting and evaluating the working current modulated by the control and data signals.

2. A control and data transmission installation according to claim 1, **characterised in that** the transmission device (60) comprises at least one controlled current source (62), **in that** the receiver device (20) contains an ammeter (22) and delivers a substantially constant potential difference (23) between the input and output of the subscriber, and **in that** each subscriber (1, 2) can be switched between transmission operation and reception operation.

3. A control and data transmission installation according to claim 1 or 2, **characterised in that** at least one subscriber can be a master subscriber.

4. A control and data transmission installation according to any one of claims 1 to 3, **characterised in that** the subscribers can transmit data and/or control signals in both directions over the bus (42, 44).

5. A control and data transmission installation according to any one of claims 1 to 4, **characterised in that** each subscriber (1, 2) has a DC supply source (10) and/or a controllable bus terminating device (30).

6. A control and data transmission installation according to claim 5, **characterised in that** the subscribers are built up from at least one integrated circuit.

7. A control and data transmission installation according to any one of claims 1 to 6, **characterised in that** the time constant of the bus terminating device (30) is larger than the bit length of the control and data signals for transmission.

8. A control and data transmission installation according to any one of claims 1 to 7, **characterised in that** the energy supply to the subscribers (1, 2) is effected via the bus (42, 44).

9. A control and data transmission installation according to any one of claims 1 to 8, **characterised in that** each subscriber is of symmetrical construction with respect to its connecting devices carrying the working current.

10. A control and data transmission installation according to any one of claims 1 to 9, **characterised in that** the bus comprises at two-wire line (42, 44) in the from of a ring or stub.

11. A control and data transmission installation according to any one of claims 1 to 10, **characterised in that** it can configure itself after commissioning or after an interruption, particularly of the bus.

## Revendications

1. Système de commande et de transmission de données, notamment pour des véhicules automobiles, présentant les caractéristiques suivantes :
- un bus sériel (42, 44) pour la transmission de signaux de commande et de données,
- plusieurs utilisateurs (1, 2) pouvant être insérés dans la boucle du bus (42, 44), et
- une source d'alimentation en tension continue (10),
**caractérisé par**
un dispositif de terminaison de bus réglable (30) pour l'introduction d'un courant de travail prédéterminé dans le bus (42, 44),
chaque utilisateur (1, 2) présentant les caractéristiques suivantes :
un dispositif émetteur (60, 62) couplé pour ce qui est du courant continu et destiné à produire et émettre des signaux de commande et de données modulant le courant de travail, et
un dispositif récepteur (20, 22, 23) couplé pour ce qui est du courant continu et destiné à détecter et évaluer le courant de travail modulé par les signaux de commande et de données.

2. Système de commande et de transmission de données selon la revendication 1, **caractérisé en ce que** le dispositif émetteur (60) contient au moins une source de courant commandée (62), **en ce que** le dispositif récepteur (20) contient un dispositif de mesure de courant (22) et fournit entre l'entrée et la sortie de l'utilisateur une différence de potentiel sensiblement constante (23), et **en ce que** chaque utilisateur (1, 2) est commutable entre fonctionnement en émission et fonctionnement en réception.

3. Système de commande et de transmission de données selon la revendication 1 ou 2, **caractérisé en ce qu'**au moins un utilisateur est capable d'être le maître.

4. Système de commande et de transmission de données selon l'une des revendications 1 à 3, **caractérisé en ce que** les utilisateurs peuvent transmettre par l'intermédiaire du bus (42, 44) des signaux de données et/ou de commande dans les deux sens.

5. Système de commande et de transmission de données selon l'une des revendications 1 à 4, **caractérisé en ce que** chaque utilisateur (1, 2) comporte une source d'alimentation en tension continue (10) et/ou un dispositif de terminaison de bus réglable (30).

6. Système de commande et de transmission de données selon la revendication 5, **caractérisé en ce que** les utilisateurs sont construits à partir d'au moins un circuit intégré.

7. Système de commande et de transmission de données selon l'une des revendications 1 à 6, **caractérisé en ce que** la constante de temps du dispositif de terminaison de bus (30) est plus grande que la longueur de bit des signaux de commande et de données à transmettre.

8. Système de commande et de transmission de données selon l'une des revendications 1 à 7, **caractérisé en ce que** l'alimentation en énergie des utilisateurs (1, 2) s'effectue par l'intermédiaire du bus (42, 44).

9. Système de commande et de transmission de données selon l'une des revendications 1 à 8, **caractérisé en ce que** chaque utilisateur est conçu de façon symétrique quant à ses dispositifs de raccordement conduisant le courant de travail.

10. Système de commande et de transmission de données selon l'une des revendications 1 à 9, **caractérisé en ce que** le bus comprend une ligne bifilaire (42, 44) sous la forme d'une ligne en anneau ou de dérivation.

11. Système de commande et de transmission de données selon l'une des revendications 1 à 10, **caractérisé en ce que**, après la mise en service ou après une interruption, notamment du bus, il peut se configurer lui-même.
